(19) Europäisches Patentamt
European Patent Office
Office européen des brevets

(11)  EP 3 772 575 B1

(12)  **EUROPEAN PATENT SPECIFICATION**

(45) Date of publication and mention
of the grant of the patent:
**16.03.2022   Bulletin 2022/11**

(21) Application number: **19190394.7**

(22) Date of filing: **06.08.2019**

(51) International Patent Classification (IPC):
**F01N 3/20** *(2006.01)*      **F01N 3/28** *(2006.01)*

(52) Cooperative Patent Classification (CPC):
**F01N 3/2013; F01N 3/2828;** F01N 2240/16;
Y02T 10/12

(54) **EXHAUST GAS PURIFICATION DEVICE AND METHOD FOR MANUFACTURING THE SAME**

ABGASREINIGUNGSVORRICHTUNG UND VERFAHREN ZUR HERSTELLUNG DAVON

DISPOSITIF DE PURIFICATION DE GAZ D'ÉCHAPPEMENT ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.02.2021   Bulletin 2021/06**

(73) Proprietor: **HIDRIA d.o.o.**
**1000 Ljubljana (SI)**

(72) Inventors:
• **URSIC, Peter**
**5222 Kobarid (SI)**

• **KUNILO, Damjan**
**5220 Tolmin (SI)**

(74) Representative: **BARRE LAFORGUE**
**35, rue Lancefoc**
**31000 Toulouse (FR)**

(56) References cited:
DE-A1- 3 613 744      DE-A1- 4 132 439
US-A1- 2017 014 763

**Description**

The invention relates to an exhaust gas purification device for a vehicle, particularly for an internal combustion engine of the vehicle. Examples of possible embodiments of the prior art may be found in DE3613744A1, US201704763A1 and DE4132439A1.

Document US 2018/0291790 discloses an exhaust gas purification device for a vehicle. The exhaust gas purification device comprises an exhaust gas purification member having a plurality of longitudinal circulation channels to circulate exhaust gases. The exhaust gas purification device also comprises a heater adapted to heat the exhaust gas by performing electrical resistance heating. In particular, the heater comprises a plurality of electrically conducting resistive wires respectively engaged longitudinally in one or several circulation channels. The exhaust gas purification device also comprises an electric power source of the resistive wires. The exhaust gas purification member has an upstream face by which the exhaust gases penetrate the exhaust gas purification member and a downstream face by which the exhaust gases leave the exhaust gas purification member. The circulation channels extend longitudinally from the upstream face to the downstream face. Each resistive wire is arranged in an S-shape and comprises a plurality of successive longitudinal segments connected to one another by switchbacks which are located inside the exhaust gas purification member. Each longitudinal segment extends from the upstream face to the downstream face. Such an exhaust gas purification device is relatively complex to manufacture. Moreover, each resistive wire must extend in a single plane. This arrangement limits the design possibilities of the device. Besides, the resistive wires are too thin to provide robustness against vibration and oxidation.

The invention aims to overcome these disadvantages.

Therefore, the aim of the invention is to propose an exhaust gas purification device for an internal combustion engine adapted to perform electrical resistance heating to heat the exhaust gas and which can be manufactured easily.

The invention also aims to propose such an exhaust gas purification device that uses heaters that are robust against vibration and oxidation.

Therefore, the invention relates to an exhaust gas purification device for an internal combustion engine, the exhaust gas purification device comprising:

- an exhaust gas purification member having a plurality of longitudinal circulation channels to circulate exhaust gas extending from an upstream face of the exhaust gas purification member by which the exhaust gases penetrate the exhaust gas purification member to a downstream face of the exhaust gas purification member by which the exhaust gases leave the exhaust gas purification member,
- a heater,

characterised in that the heater comprises:

- at least one resistor comprising:

  ○ at least two electrically conducting resistive rods, each rod extending longitudinally in a circulation channel associated thereto from the upstream face of the exhaust gas purification member to the downstream face of the exhaust gas purification member and
  ○ at least one electrically conductive connecting elements assembled outside the exhaust gas purification member to longitudinal ends of the rods of this resistor so as to connect the rods of the resistor between them, the connecting elements having holes for inserting the longitudinal ends of the rods therein,

- an electric power source connected to one end of each resistor and
- a ground electrically connected to the other end of each resistor.

The connecting elements are distinct from the resistive rods.

The resistive rods are used to heat the exhaust gas purification member by Joule effect when they are powered by the electric power source. Thus, the exhaust gas purification device is adapted to heat the exhaust gas by electrical resistance heating.

The connecting elements are used to obtain a desired electrical resistance of the heater by connecting the resistive rods between them. Moreover, the connecting elements make it possible to design a heater extending in three dimensions. Thus, such connecting elements facilitate the design and the manufacturing of the heater to the desired electrical resistance of this heater.

In some advantageous embodiments, and according to the invention, the rods are made in metal.

In some advantageous embodiments, and according to the invention, each rod has a diameter of between 0,5 mm and 5,0 mm. The thickness of the rods increases the robustness against vibration and oxidation.

Preferably, each rod has a square cross-section in order to better fit channels in the exhaust gas purification member.

In some advantageous embodiments, and according to the invention, each rod has a cross section smaller than a cross section of the channels.

In some advantageous embodiments, and according to the invention, each rod is pre-bended.

In some advantageous embodiments, and according to the invention, each connecting element has bended portions positioned against and welded to a lateral surface of the rods with which the connecting element is assembled.

In some advantageous embodiments, and according to the invention, the exhaust gas purification member has the shape of a cylinder of revolution and in that the upstream face and the downstream face are formed at two longitudinal ends of said exhaust gas purification member.

In some advantageous embodiments, and according to the invention, the heater comprises at least two resistors connected in parallel between the power source and the ground.

The invention extends to a method for manufacturing an exhaust gas purification device for an internal combustion engine comprising:

- a step of manufacturing an exhaust gas purification member having a plurality of longitudinal circulation channels to circulate exhaust gas extending from an upstream face of the exhaust gas purification member by which the exhaust gases penetrate the exhaust gas purification member to a downstream face of the exhaust gas purification member by which the exhaust gases leave the exhaust gas purification member, characterised in that it comprises:
- a step of inserting of at least one resistor into the circulation channels, each resistor comprising at least two electrically conducting resistive rods, each of the rods being inserted in a circulation channel associated thereto so as to extend longitudinally from the upstream face of the exhaust gas purification member to the downstream face of the exhaust gas purification member and
- a step of connecting one end of each resistor to an electric power source and the other end of each resistor to a ground,

and in that it comprises, for each resistor, an assembly step of at least one electrically conductive connecting elements outside the exhaust gas purification member to longitudinal ends of the rods of this resistor so as to connect the rods of this resistor between them, the connecting elements having holes for inserting the longitudinal ends of the rods therein.

In some advantageous embodiments, and according to the invention, the electrically conductive connecting elements are formed from two plates and are separated from these plates after assembling the electrically conductive connecting elements to the longitudinal ends of the rods. In particular, the connecting elements of a first metal plate are used to connect the rods on the side of the upstream face of the exhaust gas purification member. The connecting elements of the second metal plate are used to connect the rods on the side of the downstream face of the exhaust gas purification member.

In some advantageous embodiments, and according to the invention, the electrically conductive connecting elements are pre-stamped in the metal plates.

In some advantageous embodiments, and according to the invention, the electrically conductive connecting elements are pre-cut in the metal plates.

In some embodiments of the latter embodiment, each pre-cut connecting element has portions which are bent so as to be positioned against and welded to a lateral surface of the rods with which the connecting element is assembled. Such bending simplifies the welding process with the rods and reduce pressure drop within the exhaust gas purification member.

The invention further relates to an exhaust gas purification device and a method for manufacturing the same that are characterised, in combination or separately, by all or some of the features specified above or hereafter. Irrespective of the formal presentation that is provided, unless explicitly stated otherwise, the various features specified above or hereafter must not be considered to be closely or inextricably linked to each other, the invention can relate to only one of these structural or functional features, or to only some of these structural or functional features, or to only part of one of these structural or functional features, or even to any group, combination or juxtaposition of all or some of these structural or functional features.

Further aims, features and advantages of the invention will become apparent upon reading the following description, which is provided by way of a non-limiting example of some of its possible embodiments, and with reference to the accompanying drawings, in which:

- figure 1 is a perspective view of an exhaust gas purification device according to an embodiment of the invention;
- figure 2 is a longitudinal sectional view of a circulation channel in which a rod has been introduced,
- figure 3 is a top view of two metal plates comprising the electrically conductive connecting elements for manufacturing the exhaust gas purification device of figure 1;
- figure 4 is a top view and a bottom view of an exhaust gas purification device according to an embodiment of the invention;

- figure 5 is a top view of a residual of one of the metal plates of figure 3 after assembling the connecting elements to the rods of the resistor of an exhaust gas purification device;
- figure 6 is a perspective view of a connecting element according to a first embodiment,
- figure 7 is a perspective view of a connecting element according to a second embodiment,
- figure 8 is a perspective view of a connecting element according to a third embodiment,
- figure 9 is a circuit diagram of a heater of an exhaust gas purification device according to an embodiment of the invention;
- figure 10 is a graph showing the evolution of the power converted to thermal energy during a transition between two states of the switches of the heater of figure 9.

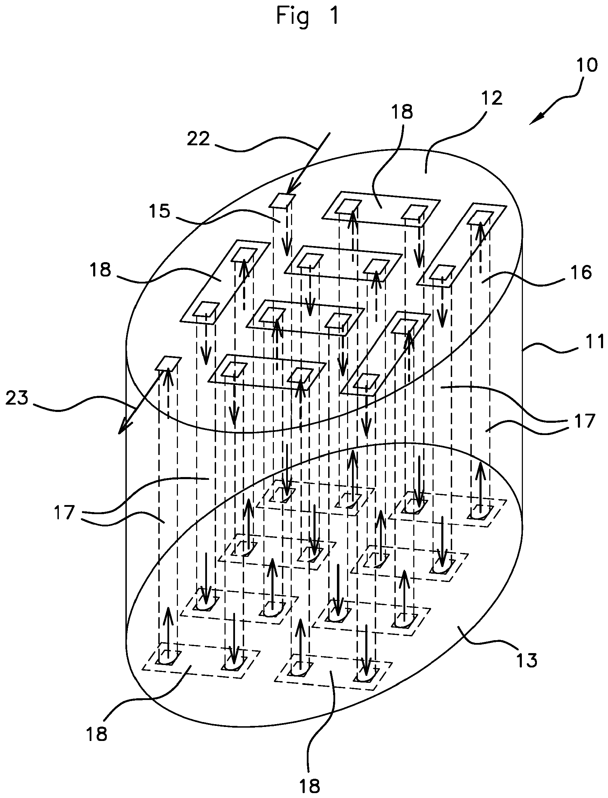

An exhaust gas purification device 10 as shown on figure 1 for an internal combustion engine of the vehicle comprises an exhaust gas purification member 11. The exhaust gas purification member 11 is made of an electrically nonconductive material. The exhaust gas purification member 11 has the shape of a cylinder of revolution. The exhaust gas purification member 11 is adapted to be traversed by exhaust gases. More particularly, exhaust gases penetrate the exhaust gas purification member 11 from an upstream face 12 of the exhaust gas purification member 11 and leave the exhaust gas purification member 11 by a downstream face 13 of the exhaust gas purification member 11. The upstream face 12 and the downstream face 13 of the exhaust gas purification member 11 are formed at two longitudinal ends of the exhaust gas purification member 11.

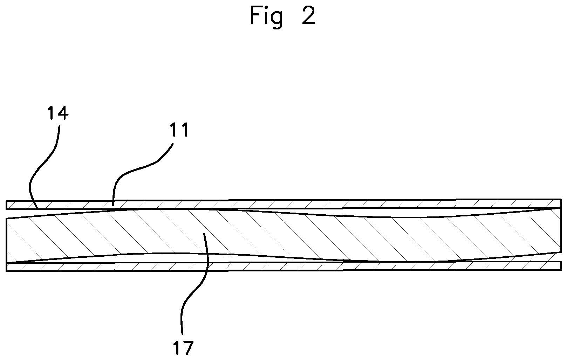

In particular, the exhaust gas purification member 11 comprises longitudinal circulation channels 14, shown on figure 2, to circulate exhaust gas extending from the upstream face 12 of the exhaust gas purification member 11 to the downstream face 13 of the exhaust gas purification member 11. The exhaust gas purification member 11 is made of a catalyst such as cordierite.

The exhaust gas purification device 10 also comprises a heater 15 to heat the exhaust gas by electrical resistance heating. To this end, the heater 15 comprises at least one resistor 16 to heat the exhaust gas. For example, in the embodiment represented on figure 1, the heater 15 comprises only one resistor. Each resistor 16 comprises at least one electrically conducting resistive rod 17. Each rod 17 of a resistor 16 extends longitudinally in a circulation channel 14 from the upstream face 12 of the exhaust gas purification member 11 to the downstream face 13 of the exhaust gas purification member 11, each of those circulation channels 14 comprising a single rod 17 of the resistor.

Each rod 17 has a cross-section greater than 50% of the cross-section of the circulation channel 14 in which the rod 17 is inserted. Preferably, each rod 17 has a cross-section of at least 90% of the cross-section of the circulation channel 14 in which the rod 17 is inserted to optimize the heat transfer between the rods 17 and the exhaust gas. In particular, the rods 17 block the circulation channels in which they are inserted. This allows obtaining an optimal heat transfer to the exhaust gas purification member 11 In particular, each rod 17 has a diameter of between 0,5 mm and 5,0 mm. The thickness of the rods 17 increases the robustness against vibration and oxidation.

In an example, each rod 17 has a square cross-section in order to better fit channels in the exhaust gas purification member. Moreover, each rod 17 is pre-bended to facilitate the insertion of the rod 17 inside a circulation channel 14 of the exhaust gas purification member 11. The pre-bended rod 17 also enables compensating the effect of thermal expansion between the rod 17 and the circulation channel 14 in which the rod 17 is inserted.

The rods 17 of a resistor 16 are connected in series or in parallel by electrically conductive connecting elements 18 assembled to longitudinal ends of the rods 17.

The connecting elements 18 are distinct from the resistive rods 17. The connecting elements 18 are welded to the longitudinal ends of the resistive rods 17.

The resistive rods 17 are used to heat the exhaust gas purification member 11 by Joule effect when they are powered by an electric power source 19.

The connecting elements 18 are used to obtain a desired electrical resistance of the heater 15 by connecting the resistive rods 17 between them. Moreover, the connecting elements 18 make it possible to design a heater 15 extending in three dimensions. Thus, such connecting elements 18 facilitate the design and the manufacturing of the heater 15 to the desired electrical resistance of this heater 15.

In an example, the connecting elements 18 and the resistive rods 17 are made of metal.

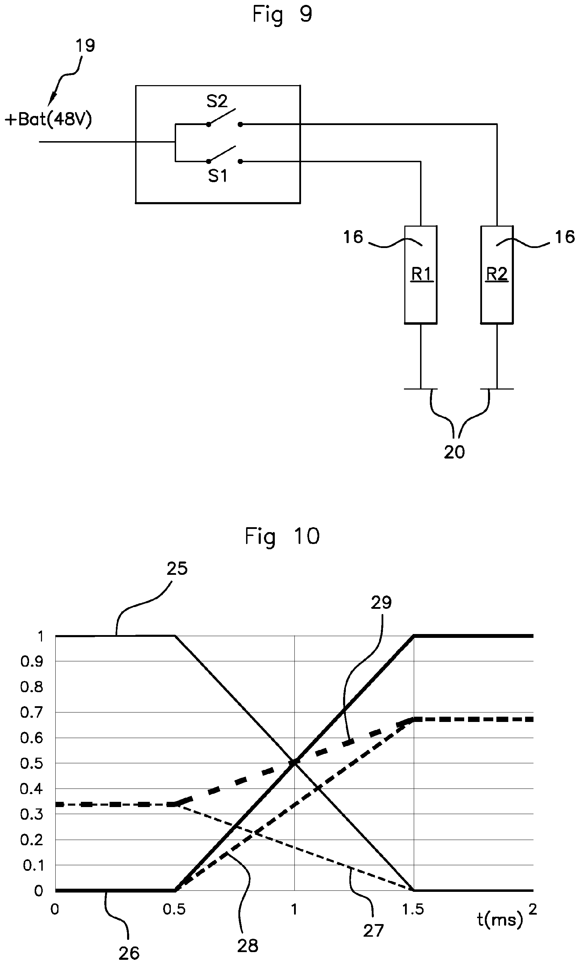

The heater 15 also comprises an electric power source 19, shown on figure 9, which is external with respect to the exhaust gas purification member 11. More particularly, the electric power source 19 is a DC power supply. For example, the electric power source is a battery of 48V.

Each resistor 16 has a first end connected to the electric power source 19 (see arrow 22) and a second end connected to a ground 20 (see arrow 23).

Therefore, an electric current can circulate in each resistor 16 from the electric power source 19 to the ground 20. Thus, each resistor 16 can be heated by the electric current by Joule effect. Heating the resistors 16 enables heating the exhaust gas purification member 11. The formula for Joule heating is: $P = U^2 / R$ with $P$ being the power converted from electrical energy to thermal energy, R being the resistance of a resistor 16, and U being the voltage across the resistor.

In some advantageous embodiments, at least one resistor 16 is connected to the electric power source 19 via a switch. For example, as shown on figure 9, the heater 15 comprises two resistors 16 arranged in parallel and connected to the electric power source 19 via a respective switch. Thus, it is possible to adjust the temperature of the exhaust gas purification member 11 by selecting the resistor 16 which has to heat the exhaust gas purification member 11. This arrangement enables performing a discrete power regulation and a smart switching to get minimized current peaks during S1 and S2 transition.

The following example illustrates the discrete power regulation which is enabled by the use of the switches. The configuration of the example is the one represented on figure 9. In this example we consider that the resistor R1 as a value of 3 units, the resistor R2 has a value of 1.5 units so that the equivalent resistance R1//R2 when both switches S1 and S2 are close has a value of 1 unit.

When switch S1 is activated and switch S2 is deactivated, the power converted from electrical energy to thermal energy is equal to $P = U^2/R1$.

When switch S1 is deactivated and switch S2 is activated, the power converted from electrical energy to thermal energy is equal to $P = U^2/R2$.

When switches S1 and S2 are activated, the power converted from electrical energy to thermal energy is equal to $P = U^2/(R1||R2)$.

When switches S1 and S2 are deactivated, there is no power converted from electrical energy to thermal energy.

Thus, as shown on table 1 with the value of the example, the power converted can be regulated by modifying the state of the switches.

Table 1

| Switch S1 | Switch S2 | Power [% of Pmax] |
|---|---|---|
| Open (Deactivated) | Open (Activated) | 0% |
| Close (Activated) | Open (Deactivated) | 33% |
| Open (Deactivated) | Close (Activated) | 67% |
| Close (Activated) | Close (Activated) | 100% |

Therefore, the power regulation is permitted by a simple and inexpensive circuitry.

Moreover, the activation and deactivation of the switches can be done so as to minimize current peaks during the period of transition between the states of the switches. Figure 10 shows an example enabling minimizing current peaks. The state of switch S1 over time is represented on curve 25. The state of switch S2 over time is represented on curve 26. Curve 27 represents the power converted to thermal energy by resistor R1 over time and the curve 28 represents the power converted to thermal energy by resistor R2 over time. Curve 29 shows the total power converted to thermal energy by the heater 15 over time. The time in milliseconds is represented on the abscissa and the power over the square of the voltage on the ordinate.

During the period of time from 0ms to 0.5ms, switch S1 is activated and switch S2 is deactivated. Then, at 0.5ms, switch S1 is deactivated and switch S2 is activated. A transition between the states of the switches takes place between 0.5ms and 1.5ms. From 1.5ms, switch S1 is fully deactivated and switch S2 is fully activated. As shown on the graph, the transition time between the states of each switch can be used to minimize current peaks.

Besides, at least one resistor 16 can be made from a material with high resistance dependence on temperature so as to permit a self-regulation of the power. Indeed, the resistance of a resistor 16 is increasing with temperature following the formula:

$$R(T) = R_0[1 + \alpha(T - T_0)],$$

where $\alpha$ is called the temperature coefficient of resistance, $T_0$ is a fixed reference temperature (usually room temperature), and $R_0$ is the resistance at temperature $T_0$. The parameter $\alpha$ is an empirical parameter fitted from measurement data which depends on the material choice for the resistor.

As consequence initial power at the resistor 16 is decreasing as temperature is rising and the power decreases.

Thus, with proper choice of material, i.e. $\alpha$, it is possible to regulate the temperature of the exhaust gas purification member 11 additionally to discrete regulation with switches S1 and S2.

An exhaust gas purification device 10 according to the invention can be manufactured as follows. The manufacturing method comprises a step of manufacturing the exhaust gas purification member 11 using known techniques.

Then, the manufacturing method comprises a step of inserting of the resistive rods 17 of each resistor 16 into the circulation channels 14 so that they extend longitudinally in the circulation channels 14 from the upstream face 12 of the exhaust gas purification member 11 to the downstream face 13 of the exhaust gas purification member 11.

Next, the manufacturing method comprises an assembly step of at least one electrically conductive connecting element 18 to the longitudinal ends of the rods 17 so as to form a circuit between the power source 19 and the ground 20.

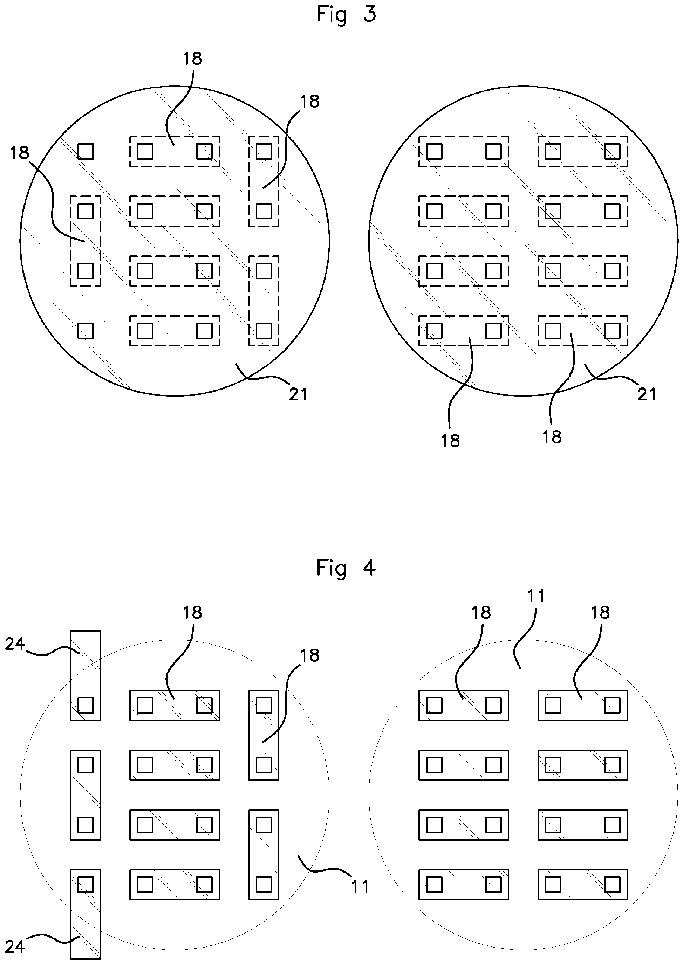

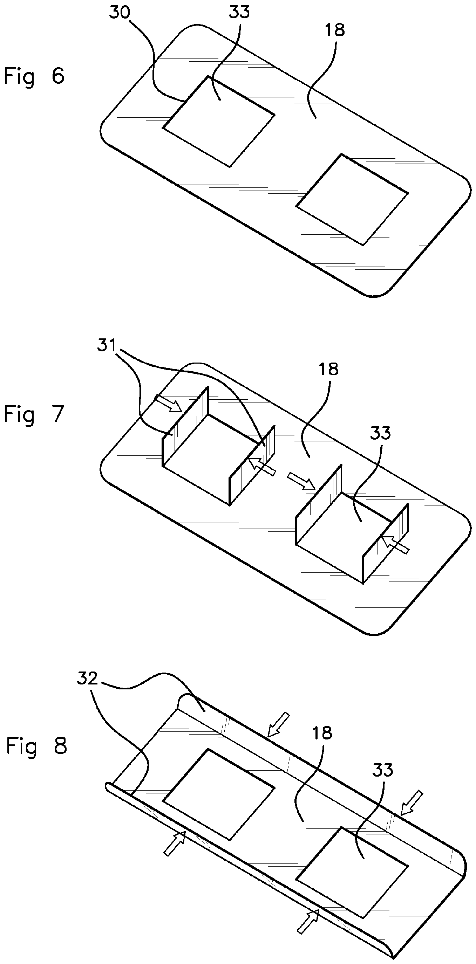

Preferably, as shown on figures 3 and 4, the connecting elements 18 are cut from two metal plates 21. The connecting elements 18 of a first metal plate 21 are used to connect the rods on the side of the upstream face 12 of the exhaust gas purification member. The connecting elements 18 of the second metal plate 21 are used to connect the rods on the side of the downstream face 13 of the exhaust gas purification member. In some advantageous embodiments, the connecting elements 18 are pre-cuts of the metals plates 21, obtained by a cutting-out tool. Precutting the connecting elements 18 facilitates the removal of the connecting elements 18 from each metal plate 21. In other advantageous embodiments, the connecting elements 18 are pre-stamped by a metalworking stamping press in each metal plate 21 (see figure 3). Pre-stamping the connecting elements 18 facilitate the removal of the connecting elements 18 from each metal plate 21. In particular, all connecting elements 18 are assembled simultaneously with each metal plate 21 onto exposed extremity of the rods 17 on both sides of the exhaust gas purification member. In particular, each connecting element 18 has holes 33 in which the longitudinal ends of the rods 17 are inserted. Then, the connecting elements 18 are welded onto extremities of rods 17 to obtain electrical interconnection and disconnected from each metal plate 21 (see figure 4). In a particular arrangement, the welding can be performed according to a laser beam welding method around the rods 17 on the periphery 30 of each hole 33, as shown on figure 6. In another particular arrangement, the connecting elements 18 are weld by performing an electro resistance welding. In this case, portions 31, 32 of each connecting element 18 are bended so as to be positioned against the lateral surface of the rods 17 to which this connecting element 18 is assembled. Then, the bended portions 31, 32 of the connecting elements 18 are welded to the longitudinal ends of the rods 17 by performing the electro resistance welding. For example, as shown on figure 7, portions 31 of each connecting element 18 can be pre-cut and bent so as to form a hole 33 in which a resistive rod is inserted and then welded to these bended portions. In some other embodiments, as shown on figure 8, each connecting element 18 has longitudinal portions 32 on its periphery which are bended so as to be positioned against the lateral surface of each rod 17 assembled to this connecting element 18. Then, these longitudinal portions 32 are welded to the rods 17 by performing the electro resistance welding. Bending the connecting elements 18 simplifies the welding process with the rods 17 and reduce pressure drop within the exhaust purification gas member 11.

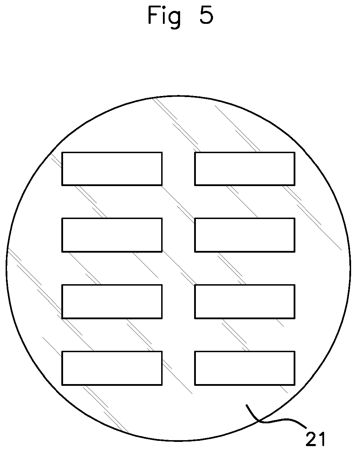

The residual of each metal plate 21 is taken away in one piece after the welding of the connecting elements 18, as shown in figure 5 for one metal plate. Some additional connecting elements 24 can be used to facilitate the connection to the power source and to the ground.

Then, the manufacturing method comprises a step of connecting the first end of each resistor 16 to an electric power source 19 and the second end of each resistor 16 to the ground 20. As mentioned above, in some embodiments, at least one resistor 16 is connected to the electric power source 19 via a switch.

The invention can be the subject of numerous variations and applications other than those described above. In particular, it is obvious that, unless otherwise specified, the various structural and functional features of each of the aforementioned embodiments must not be considered to be combined and/or closely and/or inextricably linked to one another, but, on the contrary, must be considered to be simple juxtapositions. Furthermore, the structural and/or functional features of the various embodiments described above can be the subject, in whole or in part, of any different juxtaposition or of any different combination.

**Claims**

1. Exhaust gas purification device for an internal combustion engine, the exhaust gas purification device comprising:

   - an exhaust gas purification member (11) having a plurality of longitudinal circulation channels (14) to circulate exhaust gas extending from an upstream face (12) of the exhaust gas purification member (11) by which the exhaust gases penetrate the exhaust gas purification member (11) to a downstream face (13) of the exhaust gas purification member (11) by which the exhaust gases leave the exhaust gas purification member (11),
   - a heater (15),

   **characterised in that** the heater comprises:

   - at least one resistor (16) comprising:

      ∘ at least two electrically conducting resistive rods (17), each rod extending longitudinally in a circulation channel (14) associated thereto from the upstream face (12) of the exhaust gas purification member (11) to the downstream face (13) of the exhaust gas purification member (11) and

◦ at least one electrically conductive connecting elements (18) assembled outside the exhaust gas purification member (11) to longitudinal ends of the rods (17) of this resistor (16) so as to connect the rods (17) of the resistor (16) between them, the connecting elements (18) having holes (33) for inserting the longitudinal ends of the rods (17) therein,

- an electric power source (19) connected to one end of each resistor (16) and
- a ground (20) electrically connected to the other end of each resistor (16).

2. Exhaust gas purification device according to claim 1, **characterised in that** the rods (17) are made in metal.

3. Exhaust gas purification device according to claim 2, **characterised in that** each rod (17) has a diameter of between 0,5 mm and 5,0 mm.

4. Exhaust gas purification device according to claim 2, **characterised in that** each rod (17) has a square cross-section.

5. Exhaust gas purification device according to claim 3 or 4, **characterised in that** each rod (17) has a cross section smaller than a cross section of the channels.

6. Exhaust gas purification device according to claim 5, **characterised in that** each rod (17) is pre-bended.

7. Exhaust gas purification device according to any of claims 1 to 6, **characterised in that** each connecting element (18) has bended portions (31, 32) positioned against and welded to a lateral surface of the rods (17) with which the connecting element (18) is assembled.

8. Exhaust gas purification device according to any of claims 1 to 6, **characterised in that** the exhaust gas purification member (11) has the shape of a cylinder of revolution and **in that** the upstream face (12) and the downstream face (13) are formed at two longitudinal ends of said exhaust gas purification member (11).

9. Exhaust gas purification device according to any of claims 1 to 7, **characterised in that** the heater comprises at least two resistors connected in parallel between the power source and the ground.

10. Exhaust gas purification device according to claim 8, **characterised in that** each group of resistive rods (17) is connected to the electric power source (19) via a switch (S1, S2).

11. Method for manufacturing an exhaust gas purification device for an internal combustion engine comprising:

- a step of manufacturing an exhaust gas purification member (11) having a plurality of longitudinal circulation channels (14) to circulate exhaust gas extending from an upstream face (12) of the exhaust gas purification member (11) by which the exhaust gases penetrate the exhaust gas purification member (11) to a downstream face (13) of the exhaust gas purification member (11) by which the exhaust gases leave the exhaust gas purification member (11),

**characterised in that** it comprises:

- a step of inserting of at least one resistor (16) into the circulation channels (14), each resistor (16) comprising at least two electrically conducting resistive rods (17), each of the rods being inserted in a circulation channel (14) associated thereto so as to extend longitudinally from the upstream face (12) of the exhaust gas purification member (11) to the downstream face (13) of the exhaust gas purification member (11) and
- a step of connecting one end of each resistor (16) to an electric power source (19) and the other end of each resistor (16) to a ground (20),

and **in that** it comprises, for each resistor, an assembly step of at least one electrically conductive connecting elements (18) outside the exhaust gas purification member (11) to longitudinal ends of the rods (17) of this resistor (16) so as to connect the rods (17) of this resistor (16) between them, the connecting elements (18) having holes (33) for inserting the longitudinal ends of the rods (17) therein.

**12.** Method according to claim 11, **characterised in that** the electrically conductive connecting elements (18) are formed from two plates (21) and are separated from these plates (21) after assembling the electrically conductive connecting elements (18) to the longitudinal ends of the rods (17).

**13.** Method according to claim 11, **characterised in that** the electrically conductive connecting elements (18) are pre-stamped in the metal plates (21).

**14.** Method according to claim 11, **characterised in that** the electrically conductive connecting elements (18) are pre-cut in the metal plates (21).

**15.** Method according to claim 14, **characterised in that** each pre-cut connecting element (18) has portions (31, 32) which are bent so as to be positioned against and welded to a lateral surface of the rods (17) with which the connecting element (18) is assembled.

**Patentansprüche**

**1.** Abgasreinigungsvorrichtung für eine Brennkraftmaschine, wobei die Abgasreinigungsvorrichtung umfasst:

- ein Abgasreinigungselement (11), das eine Mehrzahl von längsverlaufenden Zirkulationskanälen (14) zum Zirkulieren von Abgas aufweist, die sich von einer stromaufwärtigen Fläche (12) des Abgasreinigungselements (11), durch die die Abgase in das Abgasreinigungselement (11) eintreten, zu einer stromabwärtigen Fläche (13) des Abgasreinigungselements (11), durch die die Abgase das Abgasreinigungselement (11) verlassen, erstrecken,
- eine Heizvorrichtung (15),

**dadurch gekennzeichnet, dass** die Heizvorrichtung umfasst:

- mindestens einen Widerstand (16), der umfasst:

o mindestens zwei elektrisch leitende resistive Stäbe (17), wobei sich jeder Stab in Längsrichtung in einem damit assoziierten Zirkulationskanal (14) von der stromaufwärtigen Fläche (12) des Abgasreinigungselements (11) zu der stromabwärtigen Fläche (13) des Abgasreinigungselements (11) erstreckt, und
o mindestens ein elektrisch leitendes Verbindungselemente (18), die außerhalb des Abgasreinigungselements (11) an Längsenden der Stäbe (17) dieses Widerstands (16) montiert sind, um die Stäbe (17) des Widerstands (16) zwischen ihnen zu verbinden, wobei die Verbindungselemente (18) Öffnungen (33) zum Einsetzen der Längsenden der Stäbe (17) darin aufweisen,

- eine elektrische Leistungsquelle (19), die mit einem Ende jedes Widerstands (16) verbunden ist, und
- eine Masse (20), die mit dem anderen Ende jedes Widerstands (16) verbunden ist.

**2.** Abgasreinigungsvorrichtung nach Anspruch 1, **dadurch gekennzeichnet, dass** die Stäbe (17) aus Metall bestehen.

**3.** Abgasreinigungsvorrichtung nach Anspruch 2, **dadurch gekennzeichnet, dass** jeder Stab (17) einen Durchmesser von zwischen 0,5 mm und 5,0 mm aufweist.

**4.** Abgasreinigungsvorrichtung nach Anspruch 2, **dadurch gekennzeichnet, dass** jeder Stab (17) einen quadratischen Querschnitt aufweist.

**5.** Abgasreinigungsvorrichtung nach Anspruch 3 oder 4, **dadurch gekennzeichnet, dass** jeder Stab (17) einen Querschnitt aufweist, der kleiner als ein Querschnitt der Kanäle ist.

**6.** Abgasreinigungsvorrichtung nach Anspruch 5, **dadurch gekennzeichnet, dass** jeder Stab (17) vorgebogen ist.

**7.** Abgasreinigungsvorrichtung nach einem der Ansprüche 1 bis 6, **dadurch gekennzeichnet, dass** jedes Verbindungselement (18) gebogene Abschnitte (31, 32) aufweist, die gegen eine laterale Fläche der Stäbe (17) positioniert und daran geschweißt sind, mit der das Verbindungselement (18) montiert wird.

8. Abgasreinigungsvorrichtung nach einem der Ansprüche 1 bis 6, **dadurch gekennzeichnet, dass** das Abgasreinigungselement (11) die Form eines Rotationszylinders aufweist, und dadurch, dass die stromaufwärtige Fläche (12) und die stromabwärtige Fläche (13) an zwei Längsenden des Abgasreinigungselements (11) ausgebildet sind.

9. Abgasreinigungsvorrichtung nach einem der Ansprüche 1 bis 7, **dadurch gekennzeichnet, dass** die Heizvorrichtung mindestens zwei Widerstände umfasst, die parallel zwischen der Leistungsquelle und der Masse verbunden sind.

10. Abgasreinigungsvorrichtung nach Anspruch 8, **dadurch gekennzeichnet, dass** jede Gruppe von resistiven Stäben (17) mit der elektrischen Leistungsquelle (19) über einen Schalter (S1, S2) verbunden ist.

11. Verfahren zum Herstellen einer Abgasreinigungsvorrichtung für eine Brennkraftmaschine, umfassend:

- einen Schritt zum Herstellen eines Abgasreinigungselements (11), das eine Mehrzahl von längsverlaufenden Zirkulationskanälen (14) zum Zirkulieren von Abgas aufweist, die sich von einer stromaufwärtigen Fläche (12) des Abgasreinigungselements (11), durch die die Abgase in das Abgasreinigungselement (11) eintreten, zu einer stromabwärtigen Fläche (13) des Abgasreinigungselements (11), durch die die Abgase das Abgasreinigungselement (11) verlassen, erstrecken, **dadurch gekennzeichnet, dass** es umfasst:
- einen Schritt zum Einsetzen mindestens eines Widerstands (16) in die Zirkulationskanäle (14), wobei jeder Widerstand (16) mindestens zwei elektrisch leitende resistive Stäbe (17) aufweist, wobei jeder der Stäbe in einen damit assoziierten Zirkulationskanal (14) derart eingesetzt wird, dass er sich in Längsrichtung von der stromaufwärtigen Fläche (12) des Abgasreinigungselements (11) zu der stromabwärtigen Fläche (13) des Abgasreinigungselements (11) erstreckt, und
- einen Schritt zum Verbinden eines Endes jedes Widerstands (16) mit einer elektrischen Leistungsquelle (19) und des anderen Endes jedes Widerstands (16) mit einer Masse (20),

und dadurch, dass es für jeden Widerstand einen Montageschritt mindestens eines elektrisch leitenden Verbindungselemente (18) außerhalb des Abgasreinigungselements (11) an Längsenden der Stäbe (17) dieses Widerstands (16) umfasst, um die Stäbe (17) dieses Widerstands (16) zwischen ihnen zu verbinden, wobei die Verbindungselemente (18) Öffnungen (33) zum Einsetzen der Längsenden der Stäbe (17) darin aufweisen.

12. Verfahren nach Anspruch 11, **dadurch gekennzeichnet, dass** die elektrisch leitenden Verbindungselemente (18) aus zwei Platten (21) ausgebildet sind und von diesen Platten (21) nach Montage der elektrisch leitenden Verbindungselemente (18) an den Längsenden der Stäbe (17) getrennt sind.

13. Verfahren nach Anspruch 11, **dadurch gekennzeichnet, dass** die elektrisch leitenden Verbindungselemente (18) in den Metallplatten (21) vorgestanzt sind.

14. Verfahren nach Anspruch 11, **dadurch gekennzeichnet, dass** die elektrisch leitenden Verbindungselemente (18) in den Metallplatten (21) vorgeschnitten sind.

15. Verfahren nach Anspruch 14, **dadurch gekennzeichnet, dass** jedes vorgeschnittene Verbindungselement (18) Abschnitte (31, 32) aufweist, die derart gebogen sind, dass sie gegen eine laterale Fläche der Stäbe (17) positioniert und daran geschweißt werden, mit der das Verbindungselement (18) montiert wird.

**Revendications**

1. **Dispositif** de purification des gaz d'échappement pour un moteur à combustion interne, le dispositif de purification des gaz d'échappement comprenant :

- un élément de purification des gaz d'échappement (11) ayant une pluralité de canaux de circulation longitudinaux (14) pour faire circuler les gaz d'échappement s'étendant d'une face amont (12) de l'élément de purification des gaz d'échappement (11) par laquelle les gaz d'échappement pénètrent dans l'élément de purification des gaz d'échappement (11) à une face aval (13) de l'élément de purification des gaz d'échappement (11) par laquelle les gaz d'échappement quittent l'élément de purification des gaz d'échappement (11),
- un dispositif de chauffage (15),

**caractérisé en ce que** le dispositif de chauffage comprend

- au moins une résistance (16) comprenant :

◦ au moins deux tiges résistives électriquement conductrices (17), chaque tige s'étendant longitudinalement dans un canal de circulation (14) qui lui est associé depuis la face amont (12) de l'élément de purification des gaz d'échappement (11) jusqu'à la face aval (13) de l'élément de purification des gaz d'échappement (11) et

◦ au moins un élément de connexion électriquement conducteur (18) assemblé à l'extérieur de l'élément de purification des gaz d'échappement (11) aux extrémités longitudinales des tiges (17) de cette résistance (16) de manière à connecter les tiges (17) de la résistance (16) entre elles, les éléments de connexion (18) ayant des trous (33) pour y insérer les extrémités longitudinales des tiges (17),

- une source d'énergie électrique (19) connectée à une extrémité de chaque résistance (16) et
- une masse (20) connectée électriquement à l'autre extrémité de chaque résistance (16).

2. Dispositif de purification des gaz d'échappement selon la revendication 1, **caractérisé en ce que** les tiges (17) sont réalisées en métal.

3. Dispositif de purification des gaz d'échappement selon la revendication 2, **caractérisé en ce que** chaque tige (17) a un diamètre compris entre 0,5 mm et 5,0 mm.

4. Dispositif de purification des gaz d'échappement selon la revendication 2, **caractérisé en ce que** chaque tige (17) présente une section carrée.

5. Dispositif de purification des gaz d'échappement selon la revendication 3 ou 4, **caractérisé en ce que** chaque tige (17) a une section transversale plus petite qu'une section transversale des canaux.

6. Dispositif de purification des gaz d'échappement selon la revendication 5, **caractérisé en ce que** chaque tige (17) est pré-courbée.

7. Dispositif de purification des gaz d'échappement selon l'une quelconque des revendications 1 à 6, **caractérisé en ce que** chaque élément de liaison (18) comporte des parties courbées (31, 32) positionnées contre et soudées à une surface latérale des tiges (17) avec laquelle l'élément de liaison (18) est assemblé.

8. Dispositif de purification des gaz d'échappement selon l'une quelconque des revendications 1 à 6, **caractérisé en ce que** l'élément de purification des gaz d'échappement (11) a la forme d'un cylindre de révolution et **en ce que** la face amont (12) et la face aval (13) sont formées à deux extrémités longitudinales dudit élément de purification des gaz d'échappement (11).

9. Dispositif de purification des gaz d'échappement selon l'une quelconque des revendications 1 à 7, **caractérisé en ce que** le dispositif de chauffage comprend au moins deux résistances connectées en parallèle entre la source d'alimentation et la masse.

10. Dispositif de purification des gaz d'échappement selon la revendication 8, **caractérisé en ce que** chaque groupe de tiges résistives (17) est relié à la source d'énergie électrique (19) par l'intermédiaire d'un interrupteur (S1, S2).

11. Procédé de fabrication d'un dispositif de purification des gaz d'échappement pour un moteur à combustion interne comprenant :

- une étape de fabrication d'un élément de purification des gaz d'échappement (11) ayant une pluralité de canaux de circulation longitudinaux (14) pour faire circuler les gaz d'échappement s'étendant d'une face amont (12) de l'élément de purification des gaz d'échappement (11) par laquelle les gaz d'échappement pénètrent dans l'élément de purification des gaz d'échappement (11) à une face aval (13) de l'élément de purification des gaz d'échappement (11) par laquelle les gaz d'échappement quittent l'élément de purification des gaz d'échappement (11),

**caractérisé en ce qu'**il comprend

- une étape d'insertion d'au moins une résistance (16) dans les canaux de circulation (14), chaque résistance (16) comprenant au moins deux tiges résistives électriquement conductrices (17), chacune des tiges étant insérée dans un canal de circulation (14) qui lui est associé de manière à s'étendre longitudinalement de la face amont (12) de l'élément de purification des gaz d'échappement (11) à la face aval (13) de l'élément de purification des gaz d'échappement (11) et

- une étape consistant à connecter une extrémité de chaque résistance (16) à une source d'énergie électrique (19) et l'autre extrémité de chaque résistance (16) à une masse (20),

et **en ce qu'**il comprend, pour chaque résistance, une étape d'assemblage d'au moins un élément de connexion électriquement conducteur (18) extérieur à l'élément de purification des gaz d'échappement (11) à des extrémités longitudinales des tiges (17) de cette résistance (16) de manière à connecter les tiges (17) de cette résistance (16) entre elles, les éléments de connexion (18) présentant des trous (33) pour y insérer les extrémités longitudinales des tiges (17).

12. Procédé selon la revendication 11, **caractérisé en ce que** les éléments de connexion électriquement conducteurs (18) sont formés de deux plaques (21) et sont séparés de ces plaques (21) après assemblage des éléments de connexion électriquement conducteurs (18) aux extrémités longitudinales des tiges (17).

13. Procédé selon la revendication 11, **caractérisé en ce que** les éléments de connexion électriquement conducteurs (18) sont pré-emboutis dans les plaques métalliques (21).

14. Procédé selon la revendication 11, **caractérisé en ce que** les éléments de connexion électriquement conducteurs (18) sont prédécoupés dans les plaques métalliques (21).

15. Procédé selon la revendication 14, **caractérisé en ce que** chaque élément de connexion prédécoupé (18) comporte des parties (31, 32) qui sont courbées de manière à être positionnées contre et soudées à une surface latérale des tiges (17) avec laquelle l'élément de connexion (18) est assemblé.

Fig 1

Fig 2

Fig 3

Fig 4

Fig 5

Fig 6

30    33    18

Fig 7

31    18    33

Fig 8

32    18    33

Fig 9

Fig 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3613744 A1
- US 201704763 A1
- DE 4132439 A1
- US 20180291790 A